# EUROPÄISCHE PATENTSCHRIFT

(11) **EP 0 858 232 B1**
(45) Veröffentlichungstag und Bekanntmachung des Hinweises auf die Patenterteilung: **02.05.2007**
(21) Anmeldenummer: 97122948.9
(22) Anmeldetag: 29.12.1997
(51) Int. Cl.: H04Q 7/22, H04Q 7/38

(54) **Verfahren zur Übertragung von Informationen zwischen Mobilstationen und einem Kommunikationsnetz**
Method for transmitting informations between mobile stations and a communication network
Procédé de transmission d'informations entre des stations mobiles et un réseau de communication

(30) Priorität: 27.01.1997 DE 19702868
(43) Veröffentlichungstag der Anmeldung: 12.08.1998
(73) Patentinhaber: SIEMENS AKTIENGESELLSCHAFT, 80333 München (DE)
(72) Erfinder: Büttner, Hartmut, Dipl.-Ing., 36166 Haunetal (DE)

(56) Entgegenhaltungen:
- EP-A- 0 685 972
- DE-A- 3 638 735
- US-A- 5 557 655

## Beschreibung

Die Erfindung betrifft ein Verfahren zur Übertragung von Informationen zwischen Mobilstationen und einem Kommunikationsnetz, ein entsprechendes Kommunikationsnetz und eine entsprechende Mobilstation.

Kommunikationsnetze wie beispielsweise das Mobilfunknetz nach dem GSM-Standard (Global System for Mobile Communication) ermöglichen Kommunikationsverbindungen zu Mobilstationen mobiler Teilnehmer über eine Funkschnittstelle - siehe z.B. EP-A-0 685 972. Dabei verfügt das Kommunikationsnetz über funktechniche Einrichtungen in einem funktechnischen Teilsystem und über vermittlungstechnische Einrichtungen in einem vermittlungstechnischen Teilsystem. Die Kommunikationsverbindungen werden aufgebaut, aufrechterhalten und abgebaut, indem Signalisierungsinformationen und Nutzinformationen - beispielsweise in Form von Sprache oder Daten - über die Funkschnittstelle in beiden Übertragungsrichtungen gesendet und empfangen werden. Der Zugang der mobilen Teilnehmer zum Kommunikationsnetz erfolgt durch die Mobilstationen, die mit netzseitig verteilt angeordneten Funkstationen (Basisstationen) drahtlos kommunizieren können.

Beim Einbuchen der Mobilstation in das Kommunikationsnetz werden nur die grundlegenden Eigenschaften der Mobilstation, wie beispielsweise Sendeleistung, Verschlüsselungsalgorithmus, Unterstützung eines Kurznachrichtendienstes (Short Message Service), mitgesendet. Nicht bekannt ist dem Kommunikationsnetz, ob ein mobiler Teilnehmer, dessen SIM-Karte (Subscriber Identity Module) grundsätzlich für bestimmte Dienste - z.B. Datendienste oder Telefaxdienste - freigeschaltet ist, diese Dienste auch tatsächlich nutzen kann. Dies hat zur Folge, dass beispielsweise eingehende Telefax- oder Datenanrufe vom Kommunikationsnetz über die Funkschnittstelle der vom Anruf betroffenen Mobilstation zugestellt werden, ohne dass eine erfolgreiche Datenübertragung zwischen dem Kommunikationsnetz und der Mobilstation sichergestellt ist. Ist nämlich die Mobilstation nicht mit der oder den zum Empfang der Daten notwendigen Zusatzeinrichtungen bestückt, kann der Datenanruf von der Mobilstation nicht entgegengenommen und die übertragenen Daten nicht ausgegeben werden. Der Datenanruf muss daher von der Mobilstation zurückgewiesen und eine entsprechende Signalisierungsinformation an das Kommunikationsnetz rückgesendet werden. Die mangelnde Kenntnis der mobilstationsseitig anzutreffenden technischen Möglichkeiten zur Nutzung von Zusatzdiensten führt zu einer unnötigen Netzlast, indem Ressourcen für die Nutzinformationsübertragung bereitgestellt werden, ohne dass eine erfolgreiche Informationsübertragung die Folge ist. Dies ist insbesondere bei Kommunikationsnetzen mit einer Funkschnittstelle von Nachteil, da üblicherweise die Übertragungskapazität und die zur Verfügung stehenden funktechnischen Ressourcen über die Luft begrenzt sind und in der Regel das Nadelöhr bei der Informationsübertragung bilden.

Es ist Aufgabe der vorliegenden Erfindung, ein Verfahren und ein Kommunikationsnetz anzugeben, durch das die netzseitige Zuteilung von Ressourcen für die Informationsübertragung über die Funkschnittstelle bei der Nutzung von Diensten effektiver erfolgen kann. Darüber hinaus ist eine entsprechend ausgestaltete Mobilstation für die Informationsübertragung anzugeben. Diese Aufgabe wird durch das Verfahren nach den Merkmalen des Patentanspruchs 1, durch das Kommunikationsnetz nach den Merkmalen des Patentanspruchs 11 und durch die Mobilstation nach den Merkmalen des Patentanspruchs 13 gelöst. Weiterbildungen der Erfindung sind den Unteransprüchen zu entnehmen.

Bei dem Verfahren gemäß der Erfindung werden Ausstattungsinformationen über jeweils an die Mobilstation angeschlossene Zusatzeinrichtungen von der Mobilstation bereitgestellt und zum Kommunikationsnetz gesendet sowie die vom Kommunikationsnetz empfangenen Ausstattungsinformationen der Mobilstation gespeichert und vor der Zuteilung von vermittlungstechnischen und/oder funktechnischen Ressourcen für einen Verbindungsaufbau zu der Mobilstation überprüft. Damit ist erreicht, dass das Kommunikationsnetz über die Ausstattung der Mobilstationen mit Zusatzeinrichtungen informiert wird, so dass bereits vor der Belegung und Zuteilung von Einrichtungen und Übertragungskapazität netzseitig entschieden werden kann, ob es sinnvoll ist, einen bestimmten Dienst - wie beispielsweise den Telefax- oder Datendienst - zur Mobilstation hin auszuführen oder alternativ dazu sofort abzuweisen, weil die Mobilstation auf Grund der für sie gespeicherten Ausstattungsinformationen nicht in der Lage ist, die über die Funkschnittstelle auszusendenden Informationen zu empfangen. Anstelle der Belegung der Ressourcen, insbesondere auf der Funkschnittstelle, für eine nicht erfolgreiche Informationsübertragung, können diese für andere Dienste zwischenzeitlich genutzt werden, die zum Erfolg führen. Durch Auswertung der im Kommunikationsnetz gespeicherten Ausstattungsinformationen über angeschlossene Zusatzeinrichtungen besteht die Möglichkeit, netzseitig die Informationsübertragung und insbesondere die Zuteilung der Ressourcen wirtschaftlicher zu betreiben.

Das Kommunikationsnetz gemäß der Erfindung weist Mittel zum Empfangen der Ausstattungsinformationen über die an die Mobilstation angeschlossenen Zusatzeinrichtungen sowie Mittel zum Speichern und Überprüfen der von der Mobilstatin empfangenen Ausstattungsinformationen vor der Zuteilung von vermittlungstechnischen und/oder funktechnischen Ressourcen auf. Auf diese Weise kann netzseitig abhängig von den gespeicherten Ausstattungsinformationen der Verbindungsaufbau für die Informationsübertragung zur Mobilstation erfolgreich durchgeführt oder alternativ dazu ohne Belegung von Ressourcen bereits im Vorhinein verhindert werden. Die Mobilstation gemäß der Erfindung weist Mittel zur Bereitstellung der Ausstattungsinformationen über die angeschlossenen Zusatzeinrichtungen und Mittel zum Aussenden dieser Ausstattungsinformaitonen zum Kommunikationsnetz auf, indem die empfangenen Ausstattungsinformationen gespeichert und vor der Zuteilung von vermittlungstechnichen und/oder funktechnischen Ressourcen überprüft werden.

Von Vorteil ist es, dass die Ausstattungsinformationen in einer Signalisierungsnachricht zumindestens beim Einbuchen der Mobilstation in das Kommunikationsnetz gesendet werden. Darüber hinaus können die Ausstattungsinformationen gemäß einer anderen vorteilhaften Weiterbildung der Erfindung auch nach Einbuchen der Mobilstation in das Kommunikationsnetz in einer Signalisierungsnachricht gesendet werden. Besonders vorteilhaft ist dabei, dass die Ausstattungsinformationen in der Signalisierungsnachricht gesendet werden, sobald von der Mobilstation eine Veränderung der Ausstattung mit Zusatzeinrichtungen festgestellt wird. Damit wird das Kommunikationsnetz in die Lage versetzt, bereits von Anfang an Informationen über die an die Mobilstation angeschlossenen Zusatzeinrichtungen zu erhalten und bereits während des Betriebs beispielsweise einen Ausstattungswechsel in Bezug auf die Zusatzeinrichtungen zu erkennen. Im zuletzt genannten Fall erfolgt die Übertragung der Signalisierungsnachricht von der Mobilstation zum Kommunikationsnetz auch ohne Aufenthaltsortswechsel des mobilen Teilnehmers.

Entsprechend einer Weiterbildung der Erfindung wird dem Kommunikationsnetz durch die Ausstattungsinformationen signalisiert, ob und welche Zusatzeinrichtungen an die Mobilstation angeschlossen sind und/oder zu welchem Zweck die Mobilstation mit zumindestens einer angeschlossenen Zusatzeinrichtung vom Teilnehmer benutzt wird. Entsprechend einer weiteren Ausprägung der Erfindung werden die Zusatzeinrichtungen über Schnittstellenanschlüsse der Mobilstation angeschlossen, über die der Mobilstation die Betriebsbereitschaft der Zusatzeinrichtungen und/oder die Veränderung der Ausstattung signalisiert wird.

Eine weitere vorteilhafte Ausgestaltung der Erfindung sieht vor, als Signalisierungsnachricht eine gemäß dem GSM-Standard festgelegte Nachricht, in die die Ausstattungsinformationen eingefügt wird, zu verwenden. Gemäß einer dazu alternativen Weiterbildung der Erfindung kann als Signalisierungsnachricht auch eine neue, im GSM-Standard nicht festgelegte Nachricht, die die Ausstattungsinformationen enthält, verwendet werden.

Die Speicherung der Ausstattungsinformationen erfolgt gemäß einer Weiterbildung der Erfindung vorteilhafterweise zumindestens durch ein Heimatregister eines Mobilfunknetzes. Eine weitere günstige Ausgestaltung sieht vor, die Ausstattungsinformationen in einem Besucherregister VLR des Mobilfunknetzes zu speichern.

Die Erfindung wird anhand eines in einer Zeichnung dargestellten Ausführungsbeispiels näher erläutert. Dabei zeigen
FIG 1 das Blockschaltbild eines Mobilfunksystems mit Mobilstation und Mobilfunknetz in vereinfachter Darstellung,
FIG 2 eine schematische Darstellung der am erfindungsgemäßen Verfahren beteiligten Einrichtungen zur Informationsübertragung,
FIG 3 eine schematische Darstellung der am Verbindungsaufbau beteiligten Einrichtungen bei einem im Mobilfunknetz ankommenden Anruf für eine Datenübertragung und
FIG 4 an einem Ausführungsbeispiel die schematische Darstellung des Aufbaus der Signalisierungsnachricht zur Übertragung der Informationen über die Ausstattung der Mobilstation.

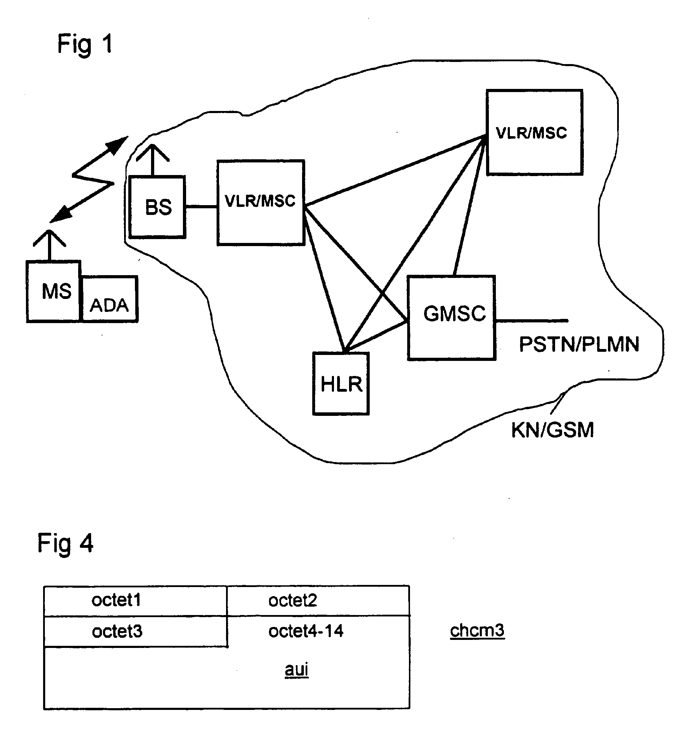

Das Kommunikationsnetz KN nach FIG 1 ist beispielsweise als GSM-Mobilfunknetz GSM ausgestaltet. Dazu weist es Vermittlungseinrichtungen VLR/MSC und GMSC auf, die zum vermittlungstechnischen Teilsystem eines Mobilfunksystems gehören und miteinander verbunden sind. Eine Vermittlungseinrichtung VLR/MSC stellt die Verbindung zu einem mobilen Teilnehmer über eine Basisstation BS und über eine Funkschnittstelle zwischen Basisstation BS und einer Mobilstation MS her. Üblicherweise bilden mehrere über den gesamten Funkversorgungsbereich verteilt angeordnete Basisstationen und Basisstationssteuerungen das funktechnische Teilsystem des Mobilfunksystems. Dabei sind die Vermittlungseinrichtungen VLR/MSC über die Basisstationssteuerungen an die Basisstationen angeschlossen. Eine weitere Vermittlungseinrichtung GMSC bildet den Netzübergang in zumindestens ein weiteres Netz, das z.B. ein Festnetz PSTN oder ein Mobilfunknetz PLMN sein kann.

Die Mobilstation MS ist das Kommunikationsendgerät des mobilen Teilnehmers. Sie kann mit Zusatzeinrichtungen ADA versehen werden, die mit Schnittstellenanschlüssen der Mobilstation verbindbar sind. So können beispielsweise steckbare Datenadapter oder Telefaxadapter zur Übertragung von Daten von/zu der Mobilstation MS anheschlossen werden. Auch Bildschirme, Massenspeicher oder ganze Geräte sind als Zusatzeinrichtungen ADA an die Mobilstation MS anschließbar. Dabei kann jede Mobilstation MS grundsätzlich mit oder ohne die Zusatzeinrichtungen ADA vom mobilen Teilnehmer benutzt werden. Bei bestimmten Anwendungen der Mobilstation MS, wie beispielsweise zur Datenübertragung, zum Empfang von Verkehrsleitinformationen, zur Abrechnung von Autobahngebühren, usw. ist die Anschaltung der Zusatzeinrichtungen ADA für die erfolgreiche Informationsübertragung erforderlich. Dabei erfolgt ein Austausch von Steuersignalen zwischen Zusatzeinrichtung ADA und Mobilstation MS zur Signalisierung des Vorhandenseins bzw. Nichtvorhandenseins der Zusatzeinrichtung. Von der Mobilstation MS kann durch Auswertung der Steuersignale in dem ohnehin vorhandenen Signalprozessor erkannt werden, ob und welche Zusatzeinrichtung mit ihr verbunden ist.

Nach FIG 1 ist zumindestens eine Speichereinheit HLR als Heimatregister für die Teilnehmerdaten der mobilen Teilnehmer vorgesehen und als eine eigenständige Einheit ausgebildet, die mit den beispielhaft dargestellten Vermittlungseinrichtungen VLR/MSC und GMSC verbunden ist. Die Vermittlungseinrichtung VLR/MSC weist eine Speichereinheit VLR als Besucherregister VLR auf, die Teilnehmerdaten von mobilen Teilnehmern enthält, solange diese sich im Einzugsbereich der Vermittlungseinrichtung VLR/MSC befinden.

Vom mobilen Teilnehmer mit der Mobilstation MS abgehende Verbindungsaufbaunachrichten werden im Kommunikationsnetz KN von der Vermittlungseinrichtung VLR/MSC, in deren Einzugsbereich sich der mobile Teilnehmer gerade befindet, zuerst verarbeitet. Dort ist die Abfrage von Diensten, insbesondere auch von Zusatzdiensten, die neben den Basistelekommunikationsdiensten existieren, zu veranlassen. An den mobilen Teilnehmer gerichtete Anrufe werden in der Vermittlungseinrichtung GMSC des Netzübergangs bearbeitet. Beispielhaft sei angenommen, daß die Verbindungsaufbaunachrichten aus dem Festnetz PSTN die Vermittlungseinrichtung GMSC des Netzübergangs erreichen, von der die innerhalb des Mobilfunknetzes GSM oder in anderen Netzen, mit denen entsprechende Abkommen bestehen, zur Verfügung stehenden Dienste abgefragt werden.

Die Speichereinheiten HLR, VLR enthalten jeweils Informationen über die Dienste, die für die Teilnehmer registriert sind, wobei die Informationen über ein "Location Update" in das Besucherregister VLR gelangen. Diese Informationen sind dabei zusätzlich zu den Teilnehmerdaten eines Teilnehmers, z.B. dem Teilnehmer in Tabellenform zugeordnet, gespeichert. Die zusätzlichen Informationen können Angaben über mehrere zusätzliche Dienste SS enthalten. Die Administrierung und Inanspruchnahme eines Datendienstes mit an die Mobilstation MS angeschlossenen Zusatzeinrichtungen ADA soll anhand der weiteren Figuren erläutert werden.

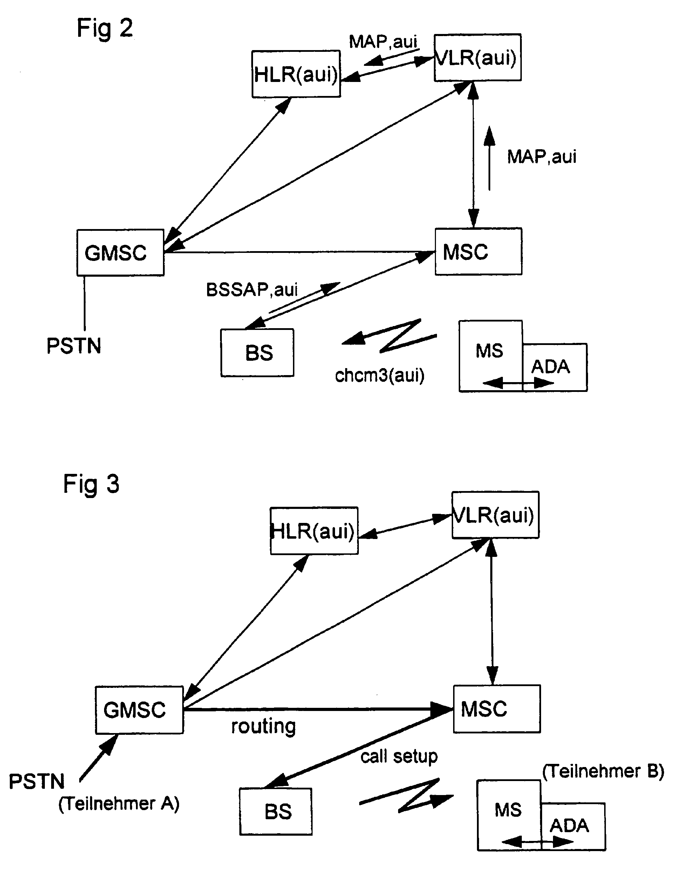

Die FIG 2 zeigt die Einrichtungen für den Ablauf des erfindungsgemäßen Verfahrens. Die Mobilstation MS empfängt über ihre Schnittstellenanschlüsse Informationen, daß eine oder mehrere Zusatzeinrichtungen ADA angeschlossen und betriebsbereit sind, und erzeugt Ausstattungsinformationen aui zur Kennzeichnung der angeschlossenen Zusatzeinrichtungen ADA. Damit erkennt sie die technischen Möglichkeiten zur Ausführung bestimter Dienste. Im vorliegenden Beispiel sei angenommen, daß als Zusatzeinrichtung ein Datenadapter zur Datenübertragung mit der Mobilstation MS verbunden ist. Die Ausstattungsinformationen aui bestehen für diesen Fall z.B. aus einer Information, daß ein Zusatzgerät angeschaltet ist, und einer Information, daß es sich um einen Datenadapter handelt. Sobald sich die Mobilstation MS in das Kommunikationsnetz einbucht, werden die von ihr bereitgestellten Ausstattungsinformationen aui zusätzlich zu den ohnehin mitzuteilenden elementaren Informationen - z.B. Sendeleistung, Verschlüsselungsalgorithmus, Unterstützung des Kurznachrichtendienstes (Short Message Service) - gesendet. Dies kann beispielsweise in einer Signalisierungsnachricht chcm3 erfolgen, die über die Funkschnittstelle übertragen wird. Als Signalisierungsnachricht chcm3 kann sowohl eine im GSM-Standard bereits definierte und zur Informationsübertragung zwischen Mobilstation MS und Kommunikationsnetz benutzte Nachricht als auch eine neue Nachricht verwendet werden. Die Ausstattungsinformationen aui können sich nicht nur auf die anschließbaren Zusatzeinrichtungen selbst, wie z.B. Bildschirm, Massenspeicher, Datenendeinrichtung, sondern auch auf die damit unterstützten Dienste und Zusatzdienste, wie z.B. Empfang von Verkehrsleitinformationen, Autobahngebührenabrechnung an Stelle des Telefonierens, beziehen.

Die Signalisierungsnachricht chcm3 mit den Ausstattungsinformationen aui wird netzseitig von der Basisstation BS empfangen und zu der für die Mobilstation MS bzw. den mobilen Teilnehmer zuständigen Vermittlungseinrichtung MSC weitergesendet. Die Übertragung der Ausstattungsinformationen aui erfolgt gemäß dem Anwenderteil BSSAP, der im GSM-Standard für die Übertragung an der Schnittstelle zwischen funktechnischem Teilsystem und vermittlungstechnischem Teilsystem festgelegt ist. Der Vorteil besteht darin, daß das bestehende Protokoll zur zusätzlichen Übertragung der Ausstattungsinformationen aui nicht verändert zu werden braucht. Von der Vermittlungseinrichtung MSC gelangen die Ausstattungsinformationen aui zunächst zum zugeordneten Besucherregister VLR, in dem sie zusätzlich zu den für den mobilen Teilnehmer registrierten Daten gespeichert werden. Zur Informationsübertragung wird vorteilhafterweise der ebenfalls bereits im GSM-Standard definierte mobilfunkspezifische Anwenderteil MAP benutzt. Da die Daten des mobilen Teilnehmers bzw. der Mobilstation MS nur für die Dauer des Aufenthalts im Besucherregister zur Verfügung stehen, erfolgt auch die Übertragung der Ausstattungsinformationen aui zum Heimatregister HLRI, wo sie dann als permanente Daten gespeichert sind. Dazu sendet das Besucherregister VLR die Ausstattungsinformationen aui gemäß dem Anwenderteil MAP aus. Eine dazu alternative Möglichkeit sieht vor, die Ausstattungsinformationen aui mittels zumindestens einer Container-Nachricht (USSD, Unstructured Supplementary Services Data) transparent von der Mobilstation MS zum Heimatregister HLR im Kommunikationsnetz zu senden. Die Signalisierungsnachricht chcm3 kann von der Mobilstation MS jederzeit, d.h. auch insbesondere nach Einbuchen der Mobilstation MS während des eingeschalteten Zustands, zum Kommunikationsnetz übermittelt werden. Die Mobilstation MS ist damit in der Lage, eine Veränderung der Ausstattung mit Zusatzeinrichtungen zu erkennen und entsprechend zu reagieren, d.h. neue Ausstattungsinformationen aui über die Funkschnittstelle auszusenden. Dazu stellt die Mobilstation MS die Veränderung anhand bestimmter Steuersignale, die z.B. über zumindestens zwei miteinander verbundene Anschlußpins von der Zusatzeinrichtung empfangen werden, im Signalprozessor fest und bildet die neuen Ausstattungsinformationen aui. Ein Ausstattungswechsel wird beispielsweise durch Stecken oder Ziehen eines Datenadapters bzw. Telefaxadapters an der Mobilstation MS bewirkt. Die in den Speichereinrichtungen des Kommunikationsnetzes abgelegten Ausstattungsinformationen aui der Mobilstation MS können vor der Zuteilung von vermittlungstechnischen und/oder funktechnischen Ressourcen abgefragt werden, sodaß bereits vor der Belegung von Netzkapazität und Übertragungskapazität - insbesondere auf der Funkschnittstelle - für einen möglichen Verbindungsaufbau der Status der Mobilstation MS in Bezug auf die technischen Möglichkeiten durch angeschlossene Zusatzeinrichtungen berücksichtigt wird. Damit erhöht sich die Wahrscheinlichkeit für eine erfolgreiche Informationsübertragung, im vorliegenden Beispiel Datenübertragung. Eine wegen nicht angeschlossener Zusatzeinrichtungen nicht zum Erfolg führende Informationsübertragung wird von vornherein durch Bewertung der im Kommunikationsnetz, z.B. im Besucherregister bzw. Heimatregister, gespeicherten und abrufbaren Ausstattungsinformationen aui vermieden. Die Folge ist eine optimierte Verbindungsbehandlung bei der Durchführung anrufbezogener Dienste oder Zusatzdienste im Kommunikationsnetz

Die FIG 3 zeigt dieselben Einrichtungen wie FIG 2 beim Ablauf eines von einem Teilnehmer A des Festnetzes PSTN initiierten und an einen mobilen Teilnehmer B mit der Mobilstation MS und angeschlossener Zusatzeinrichtung ADA gerichteten Anrufs zur Übertragung von Daten. Der Anruf aus dem Festnetz PSTN kommt an der Vermittlungseinrichtung GMSC im Mobilfunknetz an, worauf die Vermittlungseinrichtung GMSC anhand der vom Teilnehmer A veranlaßten Wahlinformation (MSISDN) das Heimatregister HLR ermittelt und dorthin eine Signalisierungsverbindung aufbaut. Die für den Teilnehmer B im Heimatregister HLR gespeicherten Ausstattungsinformationen aui werden in Bezug auf die zur erfolgreichen Datenübertragung notwendigen Zusatzeinrichtungen überprüft. Ergibt die Überprüfung, daß die Mobilstation nicht mit Zusatzeinrichtungen ausgestattet ist, erfolgt ein vorzeitiger Abbruch der Verbindungsbehandlung im Kommunikationsnetz und eine Meldung an den Teilnehmer A, daß eine Datenübertragung derzeit nicht möglich ist.

Ergibt die Überprüfung, daß die geeigneten Zusatzeinrichtungen an die Mobilstation MS angeschlossen sind, sendet das Heimatregister HLR eine Anforderung an das Besucherregister VLR, in dessen Zuständigkeitsbereich der Teilnehmer B sich gerade befindet. Dabei können die Ausstattungsinformationen aui zum Besucherregister VLR mitgesendet werden, wenn sie nicht ohnehin schon durch das Einbuchen der Mobilstation MS dort gespeichert sind. Das Besucherregister VLR sendet eine Aufenthaltsrufnummer (MSRN) an das Heimatregister HLR zurück, das diese Nummer an die Vermittlungseinrichtung GMSC rücksendet. Auf der Basis der empfangenen Aufenthaltsrufnummer baut die Vermittlungseinrichtung GMSC die Verbindung zur Vermittlungseinrichtung MSC auf (routing), d.h. zu der Vermittlungseinrichtung, in deren Bereich sich der mobile Teilnehmer B befindet. Die Vermittlungseinrichtung MSC fordert von dem Besucherregister VLR die Teilnehmerdaten des mobilen Teilnehmers zum Verbindungsaufbau an und initiiert einen Funkruf (paging) an alle Basisstationen BS des von ihr bedienten Bereichs. Bei der Raktion auf den Funkruf wird eine Information über die Funkzelle, in der sich die Mobilstation MS aufhält, der Vermittlungseinrichtung MSC in der Gegenrichtung angezeigt. Die Vermittlungseinrichtung MSC baut daraufhin die Verbindung zur Mobilstation MS des mobilen Teilnehmers B über die Basisstation BS auf (call setup). Die Daten werden von der Mobilstation MS empfangen und über die angeschlossene Zusatzeinrichtung ADA ausgegeben.

Die FIG 4 zeigt an einem Beispiel den Inhalt der Signalisierungsnachricht chcm3, die von der Mobilstation zum Kommunikationsnetz jederzeit ausgesendet werden kann, um Informationen mit dem Netz auszutauschen. In bis zu maximal vierzehn Oktetts octet1, octet2, octet3 und octet4-14 sind Informationen wie beispielsweise die Art der Information, die Länge der Nutzinformationen und die Nutzinformationen selbst abgelegt. Dabei enthält beispielsweise das Oktett octet3 Informationen darüber, ob und welche Verschlüsselungsalgorithmen zur Authentifikation oder Informationsübertragung von der Mobilstation unterstützt werden. Die Ausstattungsinformationen aui sind in den Oktetts octet4-14 enthalten und geben - wie oben beschrieben - Hinweise darauf, ob und welche Zusatzeinrichtungen an die Mobilstation angeschlossen sind und/oder zu welchem Zweck die Mobilstation mit angeschlossener Zusatzeinrichtung verwendbar ist. Grundsätzlich kann eine beliebige Signalisierungsnachricht - auch mit einem anderen als den dargestellten Aufbau - zur Übertragung der Ausstattungsinformationen aui verwendet werden.

## Patentansprüche

1. Verfahren zur Übertragung von Informationen über eine Funkschnittstelle zwischen jeweils den Zugang von Teilnehmern bewirkenden Mobilstationen (MS) und einem zumindestens funktechnische Einrichtungen (BS) und vermittlungstechnische Einrichtungen (MSC, GMSC) aufweisenden Kommunikationsnetz (KN), bei dem
- von der Mobilstation (MS) Ausstattungsinformationen (aui) über jeweils an die Mobilstation (MS) angeschlossene Zusatzeinrichtungen (ADA) bereitgestellt und zum Kommunikationsnetz (KN) gesendet werden und
- die vom Kommunikationsnetz (KN) empfangenen Ausstattungsinformationen (aui) der Mobilstation (MS) gespeichert und vor der Zuteilung von vermittlungstechnischen und/oder funktechnischen Ressourcen für einen Verbindungsaufbau zu der Mobilstation (MS) überprüft werden.

2. Verfahren nach Anspruch 1,
**dadurch gekennzeichnet,**
**daß** die Ausstattungsinformationen (aui) in einer Signalisierungsnachricht (chcm3) zumindestens beim Einbuchen der Mobilstation (MS) in das Kommunikationsnetz (KN) gesendet werden.

3. Verfahren nach Anspruch 1 oder 2,
**dadurch gekennzeichnet,**
**daß** die Ausstattungsinformationen (aui) in einer Signalisierungsnachricht (chcm3) nach Einbuchen der Mobilstation (MS) in das Kommunikationsnetz (KN) gesendet werden.

4. Verfahren nach Anspruch 3,
**dadurch gekennzeichnet,**
**daß** neue Ausstattungsinformationen (aui) in der Signalisierungsnachricht (chcm3) gesendet werden, sobald von der Mobilstation (MS) eine Veränderung der Ausstattung mit Zusatzeinrichtungen (ADA) festgestellt wird.

5. Verfahren nach einem der Ansprüche 2 bis 4,
**dadurch gekennzeichnet,**
**daß** als Signalisierungsnachricht (chcm3) zur Informationsübertragung eine gemäß dem GSM-Standard festgelegte Nachricht, in die die Ausstattungsinformationen eingefügt wird, verwendet wird.

6. Verfahren nach einem der Ansprüche 2 bis 4,
**dadurch gekennzeichnet,**
**daß** als Signalisierungsnachricht eine neue, im GSM-Standard nicht festgelegte Nachricht, die die Ausstattungsinformationen enthält, verwendet wird.

7. Verfahren nach einem der vorhergehenden Ansprüche,
**dadurch gekennzeichnet,**
**daß** durch die Ausstattungsinformationen (aui) dem Kommunikationsnetz signalisiert wird, ob und welche Zusatzeinrichtungen (ADA) an die Mobilstation (MS) angeschlossen sind und /oder zu welchem Zweck die Mobilstation (MS) mit zumindestens einer angeschlossenen Zusatzeinrichtung (ADA) vom Teilnehmer verwendet wird.

8. Verfahren nach einem der vorhergehenden Ansprüche,
**dadurch gekennzeichnet,**
**daß** die Zusatzeinrichtungen (ADA) über Schnittstellenanschlüsse der Mobilstation (MS) angeschlossen werden, über die der Mobilstation (MS) die Betriebsbereitschaft der Zusatzeinrichtungen (ADA) und/oder die Veränderung der Ausstattung signalisiert wird.

9. Verfahren nach einem der vorhergehenden Ansprüche,
**dadurch gekennzeichnet,**
**daß** die Ausstattungsinformationen (aui) zumindestens in einem Heimatregister (HLR) eines Mobilfunknetzes (GSM) gespeichert werden.

10. Verfahren nach einem der vorhergehenden Ansprüche,
**dadurch gekennzeichnet,**
**daß** die Ausstattungsinformationen (aui) in einem Besucherregister (VLR) eines Mobilfunknetzes (GSM) gespeichert werden.

11. Kommunikationsnetz (KN) zur Übertragung von Informationen über eine Funkschnittstelle von/zu jeweils den Zugang von Teilnehmern bewirkenden Mobilstationen (MS), mit zumindestens funktechnischen Einrichtungen (BS) und vermittlungstechnischen Einrichtungen (MSC, GMSC), die aufweisen
- Mittel (BS, MSC) zum Empfangen von Ausstattungsinformationen (aui) über jeweils an die Mobilstation (MS) angeschlossene Zusatzeinrichtungen (ADA), die von der Mobilstation (MS) bereitgestellt und zum Kommunikationsnetz (KN) gesendet werden, und
- Mittel (VLR, HLR) zum Speichern und Überprüfen der empfangenen Ausstattungsinformationen (aui) der Mobilstation (MS) vor der Zuteilung von vermittlungstechnischen und/oder funktechnischen Ressourcen für einen Verbindungsaufbau zu der Mobilstation (MS).

12. Kommunikationsnetz (KN) nach Anspruch 11,
**dadurch gekennzeichnet,**
**daß** die Mittel (VLR, HLR) zum Speichern der Ausstattungsinformationen (aui) neue Ausstattungsinformationen (aui) empfangen und aufnehmen, die von der Mobilstation (MS) bei Feststellen eine Veränderung der Ausstattung mit Zusatzeinrichtungen (ADA) über die Funkschnittstelle ausgesendet wird.

13. Mobilstation (MS) zur Übertragung von Informationen über eine Funkschnittstelle von/zu einem Kommunikationsnetz (KN) mit zumindestens funktechnischen Einrichtungen (BS) und vermittlungstechnischen Einrichtungen (MSC, GMSC), die aufweist
- Mittel zur Bereitstellung von Ausstattungsinformationen (aui) über jeweils an die Mobilstation angeschlossene Zusatzeinrichtungen (ADA) und Mittel zum Aussenden der Ausstattungsinformationen (aui) zum Kommunikationsnetz (KN), in dem die empfangenen Ausstattungsinformationen (aui) der Mobilstation (MS) gespeichert und vor der Zuteilung von vermittlungstechnischen und /oder funktechnischen Ressourcen für einen Verbindungsaufbau zu der Mobilstation (MS) überprüft werden.

14. Mobilstation nach Anspruch 13,
**dadurch gekennzeichnet,**
**daß** sie Mittel zum Feststellen einer Veränderung der Ausstattung mit Zusatzeinrichtungen (ADA) und Mittel zur Bildung neuer Ausstattungsinformationen (aui) entsprechend der Ausstattungsveränderung sowie Mittel zum Aussenden der neuen Ausstattungsinformationen (aui) über die Funkschnittstelle aufweist.

## Claims

1. Method for transmitting information over a radio interface between mobile stations (MS) which each bring about access by subscribers and a communications network (KN) which has at least radio devices (BS) and switching devices (MSC, GMSC), in which
- the equipment information (aui) relating to supplementary devices (ADA) which are each connected to the mobile station (MS) is prepared by the mobile station (MS) and is transmitted to the communications network (KN), and
- the equipment information (aui) of the mobile station (MS) which is received from the communications network (KN) is stored and checked before the allocation of switching and/or radio resources for a connection setup to the mobile station (MS).

2. Method according to Claim 1, **characterized in that** the equipment information (aui) is transmitted in a signalling message (chcm3) at least when the mobile station (MS) signs on to the communications network (KN).

3. Method according to Claim 1 or 2, **characterized in that** the equipment information (aui) is transmitted in a signalling message (chcm3) after the mobile station (MS) signs on to the communications network (KN).

4. Method according to Claim 3, **characterized in that** new equipment information (aui) is transmitted in the signalling message (chcm3) as soon as the mobile station (MS) detects a change in the equipment with supplementary devices (ADA).

5. Method according to one of Claims 2 to 4, **characterized in that** a message which is defined according to the GSM standard and into which the equipment information is inserted is used as a signalling message (chcm3) for the transmission of information.

6. Method according to one of Claims 2 to 4, **characterized in that** a new message, which is not defined in the GSM standard and which contains the equipment information, is used as a signalling message.

7. Method according to one of the preceding claims, **characterized in that** the equipment information (aui) signals to the communications network whether supplementary devices (ADA) are connected to the mobile station (MS) and which supplementary devices (ADA) are connected to the mobile station (MS) and/or for what purpose the mobile station (MS) with at least one connected supplementary device (ADA) is used by the subscriber.

8. Method according to one of the preceding claims, **characterized in that** the supplementary devices (ADA) are connected over interfaces of the mobile station (MS) over which the operational readiness of the supplementary devices (ADA) and/or the change in the equipment is signalled to the mobile station (MS).

9. Method according to one of the preceding claims, **characterized in that** the equipment information (aui) is stored at least in a home register (HLR) of a mobile radio network (GSM).

10. Method according to one of the preceding claims, **characterized in that** the equipment information (aui) is stored in a visitor register (VLR) of a mobile radio network (GSM)

11. Communications network (KN) for transmitting information over a radio interface from/to mobile stations (MS) which respectively bring about access by subscribers, with at least radio devices (BS) and switching devices (MSC, GMSC), which have
- means (BS, MSC) for receiving equipment information (aui) over supplementary devices (ADA) which are each connected to the mobile station (MS), said information being prepared by the mobile station (MS) and transmitted to the communications network (KN), and
- means (VLR, HLR) for storing and checking the received equipment information (aui) of the mobile station (MS) before the allocation of switching and/or radio resources for a connection setup to the mobile station (MS).

12. Communications network (KN) according to Claim 11, **characterized in that** the means (VLR, HLR) for storing the equipment information (aui) receive and pick up new equipment information (aui) which is emitted by the mobile station (MS) over the radio interface when a change in the equipment with supplementary devices (ADA) is detected.

13. Mobile station (MS) for transmitting information over a radio interface from/to a communications network (KN) with at least radio devices (BS) and switching devices (MSC, GMSC) which has
- means for preparing equipment information (aui) over supplementary devices (ADA) which are each connected to the mobile station, and means for emitting the equipment information (aui) to the communications network (KN) in which the received equipment information (aui) of the mobile station (MS) is stored and checked before the allocation of switching and/or radio resources for a connection setup to the mobile station (MS).

14. Mobile station according to Claim 13, **characterized in that** it has means for detecting a change in the equipment with supplementary devices (ADA) and means for forming new equipment information (aui) corresponding to the change in the equipment and means for emitting the new equipment information (aui) over the radio interface.

## Revendications

1. Procédé de transmission d'informations par le biais d'une interface hertzienne entre des stations mobiles (MS), permettant chacune l'accès d'un abonné, et un réseau de communication (KN) comportant au moins des dispositifs radioélectriques (BS) et des dispositifs de la technique de commutation (MSC, GMSC), procédé dans lequel
- des informations d'équipement (aui) sont délivrées par la station mobile (MS) par le biais de dispositifs supplémentaires (ADA) raccordés chacun à la station mobile (MS) et sont envoyées au réseau de communication (KN) et
- les informations d'équipement (aui) de la station mobile (MS), qui sont reçues par le réseau de communication (KN), sont mémorisées et vérifiées avant d'attribuer à la station mobile (MS) des ressources radioélectriques et/ou de la technique de commutation pour l'établissement d'une liaison.

2. Procédé selon la revendication 1, **caractérisé en ce que** les informations d'équipement (aui) sont envoyées dans un message de signalisation (chcm3) au moins lors de la prise en compte de la station mobile (MS) dans le réseau de communication (KN).

3. Procédé selon la revendication 1 ou 2, **caractérisé en ce que** les informations d'équipement (aui) sont envoyées dans un message de signalisation (chcm3) après la prise en compte de la station mobile (MS) dans le réseau de communication (KN).

4. Procédé selon la revendication 3, **caractérisé en ce que** de nouvelles informations d'équipement (aui) sont envoyées dans le message de signalisation (chcm3) dès que la station mobile (MS) a constaté une modification de l'équipement par des dispositifs supplémentaires (ADA).

5. Procédé selon l'une des revendications 2 à 4, **caractérisé en ce que** l'on utilise comme message de signalisation (chcm3) pour la transmission d'informations un message, défini selon la norme GSM, dans lequel sont insérées les informations d'équipement.

6. Procédé selon l'une des revendications 2 à 4, **caractérisé en ce que** l'on utilise comme message de signalisation un nouveau message, non défini selon la norme GSM, qui contient les informations d'équipement.

7. Procédé selon l'une des revendications précédentes, **caractérisé en ce que** les informations d'équipement (aui) permettent de signaler au réseau de communication si des dispositifs supplémentaires (ADA) sont raccordés à la station mobile (MS) et quelles sont ces dispositifs supplémentaires et/ou dans quel but la station mobile (MS), à laquelle est raccordé au moins un dispositif supplémentaire (ADA), est utilisée par l'abonné.

8. Procédé selon l'une des revendications précédentes, **caractérisé en ce que** les dispositifs supplémentaires (ADA) sont raccordés par le biais de bornes d'interface de la station mobile (MS), lesquelles permettent de signaler à la station mobile (MS) l'état de service des dispositifs supplémentaires (ADA) et/ou la modification de l'équipement.

9. Procédé selon l'une des revendications précédentes, **caractérisé en ce que** les informations d'équipement (aui) sont mémorisées au moins dans un registre d'attache (HLR) d'un réseau de téléphonie mobile (GSM).

10. Procédé selon l'une des revendications précédentes, **caractérisé en ce que** les informations d'équipement (aui) sont mémorisées dans un registre de visiteur (VLR) d'un réseau de téléphonie mobile (GSM).

11. Réseau de communication (KN) permettant de transmettre des informations par le biais d'une interface hertzienne depuis/vers des stations mobiles (MS), permettant chacune l'accès d'un abonné, lequel réseau de communication comporte au moins des dispositifs radioélectriques (BS) et des dispositifs de la technique de commutation (MSC, GMSC), lequel réseau de communication a
- des moyens (BS, MSC) permettant de recevoir, par le biais de dispositifs supplémentaires (ADA) qui sont raccordés chacun à la station mobile (MS), des informations d'équipement (aui) qui sont délivrées par la station mobile (MS) et envoyées au réseau de communication (KN), et
- des moyens (VLR, HLR) permettant de mémoriser et vérifier les informations d'équipement reçues (aui) de la station mobile (MS) avant d'attribuer à la station mobile (MS) des ressources radioélectriques et/ou de la technique de commutation pour l'établissement d'une liaison.

12. Réseau de communication (KN) selon la revendication 11, **caractérisé en ce que** les moyens (VLR, HLR) permettant la mémorisation des informations d'équipement (aui) reçoivent et enregistrent de nouvelles informations d'équipement (aui) qui sont envoyées par la station mobile (MS) par le biais de l'interface hertzienne lors de la détermination d'une modification de l'équipement par les dispositifs supplémentaires (ADA).

13. Station mobile (MS) permettant de transmettre des informations par le biais d'une interface hertzienne depuis/vers un réseau de communication (KN) comprenant au moins des dispositifs radioélectriques (BS) et des dispositifs de la technique de commutation (MSC, GMSC), laquelle station mobile possède
- des moyens permettant de délivrer des informations d'équipement (aui) par le biais de dispositifs supplémentaires (ADA) raccordés chacun à la station mobile et des moyens permettant d'envoyer des informations d'équipement (aui) au réseau de communication (KN) dans lequel les informations d'équipement reçues (aui) de la station mobile (MS) sont mémorisées et vérifiées avant d'attribuer à la station mobile (MS) des ressources radioélectriques et/ou de la technique de commutation pour l'établissement d'une liaison.

14. Station mobile selon la revendication 13, **caractérisée en ce qu'**elle comporte des moyens permettant de constater une modification de l'équipement par des moyens supplémentaires (ADA) et des moyens permettant de former de nouvelles informations d'équipement (aui) conformément à la modification de l'équipement, ainsi que des moyens permettant d'envoyer les nouvelles informations d'équipement (aui) par le biais de l'interface hertzienne.
